# EUROPÄISCHE PATENTSCHRIFT

(11) **EP 2 975 176 B1**
(45) Veröffentlichungstag und Bekanntmachung des Hinweises auf die Patenterteilung: **07.09.2016**
(21) Anmeldenummer: 14177388.7
(22) Anmeldetag: 17.07.2014
(51) Int. Cl.: D21F 1/00, B29L 31/00, B29C 53/32, B29C 53/80

(54) **Vorrichtung zum Herstellen von Wendelsieben**
Device for the production of spiral screens
Dispositif de fabrication de tamis à spirales

(43) Veröffentlichungstag der Anmeldung: 20.01.2016
(73) Patentinhaber: Karl Mayer Textilmaschinenfabrik GmbH, 63179 Obertshausen (DE)
(72) Erfinder: Ruh, Michael, 63165 Mühlheim (DE)
(74) Vertreter: Knoblauch, Andreas

(56) Entgegenhaltungen:
- EP-A1- 0 054 930
- WO-A1-2009/056250

## Beschreibung

Die Erfindung betrifft eine Vorrichtung zum Herstellen von Wendelsieben mit mindestens einer oberhalb einer Arbeitsfläche angeordneten Wickeleinrichtung zum Erzeugen von Wendeln und einer Ablegeeinrichtung, mit der die Wendeln auf der Arbeitsfläche ablegbar sind.

Bei der Herstellung von so genannten Spiralsieben werden Wendeln aus spiralförmig gewickelten Kunststoffdrähten auf einer Arbeitsfläche nebeneinander abgelegt und miteinander in Eingriff gebracht. Im Überschneidungsbereich zwischen benachbarten Wendeln wird dann ein Steckdraht aus Kunststoff eingeschoben. Die so miteinander verbundenen Wendeln werden in der Regel um mindestens eine Wendelbreite quer zu ihrer Längsrichtung verschoben, um Platz für weitere Wendeln zu schaffen. Eine Vorrichtung der eingangs genannten Art ist beispielsweise aus WO 2009/056250 A1 bekannt. Hier ist die Wickeleinrichtung oberhalb der Arbeitsfläche angeordnet, um die Wendeln sozusagen an Ort und Stelle zu erzeugen. Damit erspart man sich einen mehrstufigen Prozess, bei dem die Wendeln zunächst erzeugt und dann zwischengelagert werden müssen, bevor sie aus dem Zwischenlager entnommen und auf der Arbeitsfläche abgelegt werden können. Dieses zweistufige Verfahren beinhaltet ein erhebliches Risiko dahingehend, dass sich die Wendeln miteinander verknoten oder verhaken, was die Entnahme aus dem Zwischenlager erschwert und zu Beschädigungen führen kann.

Bei der aus WO 2009/056250 A1 bekannten Vorrichtung wird die Ablegeeinrichtung gemeinsam mit der Wickeleinrichtung über die Arbeitsfläche verfahren und dabei eine Länge einer Wendel auf der Arbeitsfläche abgelegt. Danach wird die Wickeleihrichtung mit der Ablegeeinrichtung wieder zum Ausgangspunkt zurückgefahren, um die nächste Wendel zu erzeugen und auf der Arbeitsfläche abzulegen. Man kann auch mehrere Wickeleinrichtungen gleichzeitig verwenden und über die Arbeitsfläche verfahren. Bei der Rückbewegung der Wickeleinrichtung zum Ausgangspunkt erfolgt eine Unterbrechung, die unter Umständen bei den erzeugten Wendeln zu einer Qualitätsminderung führen könnte. Die Qualität eines aus den Wendeln zusammengesetzten Wendelsiebes hängt aber unter anderem von der Qualität der Wendeln ab.

EP 0 054 930 A1 zeigt eine Vorrichtung zur Herstellung eines Gliederbandes aus einer Vielzahl von Monofilwendelsträngen. Hierzu ist eine Ablageeinrichtung hin- und hergehend über eine Arbeitsfläche bewegbar. In jeder Bewegungsrichtung wird eine Wendel aus einem Vorratsbehälter entnommen und auf der Arbeitsfläche abgelegt. Bei der Bewegung in die entgegengesetzte Richtung wird die Förderung dieser Wendel unterbrochen. Der Erfindung liegt die Aufgabe zugrunde, eine hohe Qualität der Wendelsiebe sicherzustellen.

Diese Aufgabe wird bei einer Vorrichtung der eingangs genannten Art dadurch gelöst, dass der Wickeleinrichtung eine Speichereinrichtung nachgeschaltet ist, die während einer Rückfahrbewegung der Ablegeeinrichtung die Lange der Wendel aufnimmt, die in der Zeit der Rückfahrbewegung durch die Wickeleinrichtung erzeugt wird.

Bei einer derartigen Vorrichtung können die Wendeln nach wie vor dort erzeugt werden, wo sie später zum Erzeugen eines Wendelsiebs benötigt werden, nämlich oberhalb der Arbeitsfläche. Wenn die Ablegeeinrichtung über die Arbeitsfläche verfahren wird, dann können die Wendeln über ihre gesamte Länge auf der Arbeitsfläche abgelegt werden. Gegebenenfalls kann auch die Wickeleinrichtung gemeinsam mit der Ablegeeinrichtung bewegt werden. Bei der Rückbewegung der Ablegeeinrichtung zum Ausgangspunkt kann jedoch die Wickeleinrichtung weiter arbeiten, also weiter eine Wendel produzieren, so dass die Herstellung der Wendeln sozusagen kontinuierlich erfolgen kann. Auch wenn die Rückbewegung der Ablegeeinrichtung nach erfolgter Ablage einer Wendel zum Ausgangspunkt für die nächste Wendel mit einer erhöhten Geschwindigkeit erfolgt, kann in der Zeit der Rückbewegung keine Wendel auf der Arbeitsfläche abgelegt werden. Dies ist auch nicht erforderlich, weil die in dieser Zeit erzeugte Wendellänge durch die Speichereinrichtung aufgenommen werden kann. Die Speichereinrichtung wird also bei der Rückbewegung gefüllt und bei der Bewegung der Ablegeeinrichtung, bei der die Wendel auf der Arbeitsfläche abgelegt wird, entleert.

Vorzugsweise ist die Speichereinrichtung zwischen der Wickeleinrichtung und der Ablegeeinrichtung angeordnet. Dort steht einerseits genügend Bauraum zur Verfügung. Zum anderen ist dieser Ort ideal, um das Ablegen mit Hilfe der Ablegeeinrichtung und das Wickeln mit Hilfe der Wickeleinrichtung voneinander zu entkoppeln.

Vorzugsweise weist die Speichereinrichtung einen Füllstandsensor auf. Mit Hilfe des Füllstandsensors kann man den Befüllungsgrad der Speichereinrichtung ermitteln und diese Information in einer Steuereinrichtung weiterverarbeiten. Die Steuereinrichtung kann beispielsweise die Geschwindigkeit steuern, mit der die Ablegeeinrichtung über die Arbeitsbreite verfahren wird.

Vorzugsweise ist die Speichereinrichtung mit einer vorwählbaren Spannung betreibbar. Mit dieser mechanischen Spannung wird die von der Wickeleinrichtung erzeugte Wendel gespannt gehalten und zwar sowohl beim Ablegen als auch beim Speichern. Die Speichereinrichtung ist also als Durchlaufspeicher ausgebildet, bei der an einem Ende die Wendel zugeführt und am anderen Ende die Wendel abgeführt wird. Da die Wendel unter der mechanischen Spannung gehalten wird, lassen sich definierte Bedingungen bei der Ablage der Wendel auf der Arbeitsfläche erhalten. Darüber hinaus besteht durch die mechanische Spannung praktisch keine Gefahr, dass sich die Wendel in irgendeiner Weise verknotet oder verwirrt.

Vorzugsweise ist die Spannung über den Befüllungsgrad der Speichereinrichtung nahezu konstant. Damit ist keine Konstanz im mathematisch engeren Sinne gemeint. Vielmehr sorgt man dafür, dass die vorgewählte mechanische Spannung in einem vorbestimmten Bereich bleibt, in dem sich die Spannung nur in einem vertretbaren Maß, beispielsweise maximal 20 %, ändert. Diese Spannung hängt unter anderem von der Form und dem Material der Kunststoff-Wendeln ab.

Vorzugsweise weist die Speichereinrichtung zwei Hebel auf, die um eine gemeinsame Schwenkachse gegeneinander verschwenkbar sind, wobei an jedem Hebel mindestens eine Umlenkeinrichtung angeordnet ist, über die die Wendel führbar ist. In Abhängigkeit von der Winkelstellung der Hebel zueinander haben die Umlenkeinrichtungen einen kleineren oder einen größeren Abstand zueinander. Dieser Abstand bestimmt dann die Länge der Wendel, die in der Speichereinrichtung aufgenommen ist. Bevorzugterweise wird man mindestens drei Umlenkeinrichtungen verwenden, von denen zwei an einem Hebel und eine am anderen Hebel angeordnet sind. Natürlich sind auch mehrere Umlenkeinrichtungen möglich. Die Umlenkeinrichtungen sind vorzugsweise als Umlenkrollen ausgebildet. Wenn die Speichereinrichtung also eine größere Länge der Wendel aufnehmen muss, dann werden die Hebel auseinander geschwenkt. Wenn der Befüllungsgrad der Speichereinrichtung kleiner werden soll, dann wird ein Winkel zwischen den Hebeln ebenfalls verkleinert.

Vorzugsweise sind die Hebel mit einer Vorspanneinrichtung verbunden, die die Hebel in eine Öffnungsrichtung vorspannt. Die Vorspanneinrichtung definiert dann die mechanische Spannung, mit der die Speichereinrichtung auf die Wendel wirkt.

Hierbei ist bevorzugt, dass die Vorspanneinrichtung als Drehmagnet ausgebildet ist. Ein Drehmagnet erzeugt ein Drehmoment mit Hilfe von Magneten. Damit lässt sich ein in gewissen Grenzen konstantes Drehmoment über einen gewissen Winkelbereich erzeugen, so dass die Hebel mit diesem Drehmoment auseinander gedrückt werden.

Vorzugsweise ist der Drehmagnet als Elektromagnet ausgebildet, der mit einer Stromsteuereinrichtung verbunden ist. Mit Hilfe der Stromsteuereinrichtung lässt sich ein entsprechendes Drehmoment erzeugen. Mit Hilfe der Stromsteuerung lässt sich die Größe dieses Drehmoments einstellen. Man kann den Elektromagneten so ausbilden, dass er über den Verschwenkungsbereich der Hebel ein konstantes oder praktische konstantes Drehmoment erzeugt.

Vorzugsweise ist ein Winkelsensor vorgesehen, der eine Winkelstellung der Hebel zueinander erfasst. Dieser Winkelsensor kann dann als Füllstandsensor verwendet werden. Die Winkelstellung der beiden Hebel relativ zueinander gibt eine eindeutige Information darüber, welche Länge der Wendel in der Speichereinrichtung aufgenommen ist.

Hierbei ist bevorzugt, dass der Winkelsensor in die Vorspanneinrichtung integriert oder mit der Vorspanneinrichtung verbunden ist. Damit wird der benötigte Bauraum klein gehalten und die Anzahl der zu handhabenden Teile wird auf einem vertretbaren Maß gehalten.

Die Erfindung wird im Folgenden anhand eines bevorzugten Ausführungsbeispiels in Verbindung mit der Zeichnung beschrieben. Hierin zeigen:
- Fig. 1: eine stark schematisierte Darstellung einer Vorrichtung zum Herstellen von Wendelsieben und
- Fig. 2: eine stark schematisierte Darstellung einer Speichereinrichtung

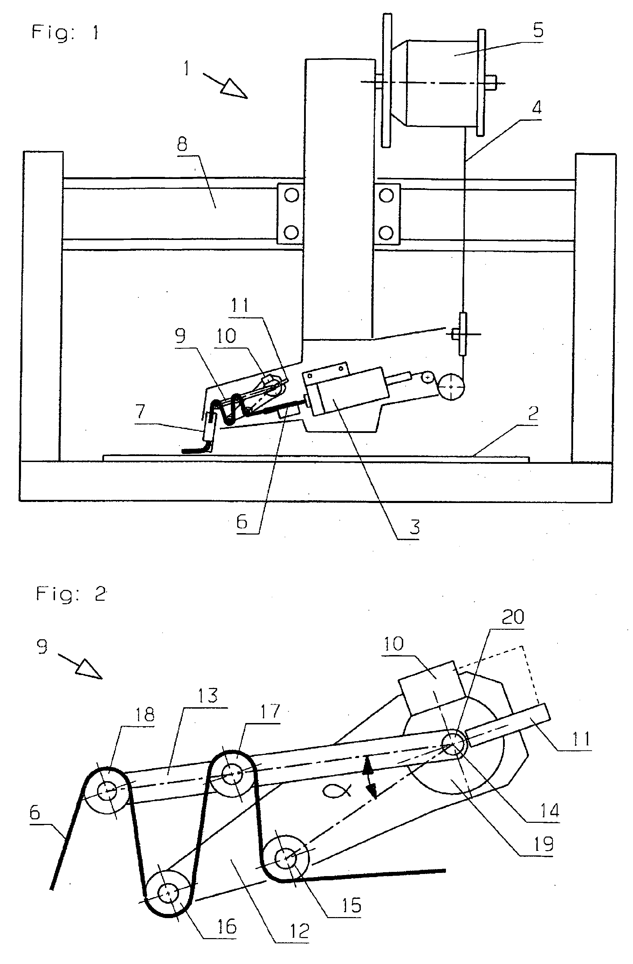

Fig. 1 zeigt stark schematisiert eine Vorrichtung 1 zum Herstellen von Wendelsieben mit einer Arbeitsfläche 2 und einer Wickeleinrichtung 3. Die Wickeleinrichtung 3 zieht einen Kunststoffdraht 4 , zum Beispiel ein Kunststoff-Monofilament, von einer Spule 5 ab und erzeugt daraus eine Wendel 6, die über eine Ablegeeinrichtung 7 auf der Arbeitsfläche 2 abgelegt wird. Um dies zu ermöglichen, ist die Wickeleinrichtung 3 gemeinsam mit der Ablegeeinrichtung 7 an einem Portal 8 verfahrbar. Ein hierzu vorgesehener Antrieb ist nicht näher dargestellt.

Es ist allerdings auch möglich, nur die Ablegeeinrichtung 7 über die Arbeitsfläche 2 zu verfahren und die Wickeleinrichtung 3 stationär zu halten oder mit einer anderen Geschwindigkeit relativ zur Arbeitsfläche zu verfahren.

Die Ablegeeinrichtung 7 legt die Wendel 6 im vorliegenden Ausführungsbeispiel von der linken Seite der Arbeitsfläche 2 bis zur rechten Seite der Arbeitsfläche 2. Danach wird die Wendel 6 durchtrennt. Die Ablegeeinrichtung 7 fährt von der rechten Seite der Arbeitsfläche 2 wieder zurück zur linken Seite der Arbeitsfläche 2, um den Ablegevorgang zu wiederholen und eine weitere Wendel auf der Arbeitsfläche 2 abzulegen.

Während dieser Rückfahrbewegung, bei der keine Wendel 6 auf der Arbeitsfläche 2 abgelegt wird, sollte die Wickeleinrichtung 3 allerdings weiter arbeiten. Die Wickeleinrichtung 3 arbeitet im vorliegenden Ausführungsbeispiel also kontinuierlich und erzeugt fortlaufend die Wendel 6.

Da aber während der Rückfahrbewegung keine Wendel 6 auf der Arbeitsfläche 2 abgelegt werden können, ist eine Speichereinrichtung 9 zwischen der Wickeleinrichtung 3 und der Ablegeeinrichtung 7 vorgesehen. Die Speichereinrichtung 9 nimmt bei der Rückfahrbewegung die Länge der Wendel 6 auf, die in der Zeit der Rückfahrbewegung durch die Wickeleinrichtung 3 erzeugt wird. Bei der nachfolgenden Ablage der Wendel 6 auf der Arbeitsfläche 2 wird die Speichereinrichtung dann wieder ganz oder teilweise entleert.

Die Speichereinrichtung 9 ist zwischen der Wickeleinrichtung 3 und der Ablegeeinrichtung 7 angeordnet. Damit lässt sich die Tätigkeit der Wickeleinrichtung 3 von der Tätigkeit der Ablegeeinrichtung 7 entkoppeln.

Die Speichereinrichtung 9 wirkt auf die Wendel 6 mit einer vorwählbaren Spannung. Diese mechanische Spannung ist über eine Steuereinrichtung 10 einstellbar, die über nicht näher dargestellte Leitungen mit der Speichereinrichtung 9 verbunden ist. Die Speichereinrichtung 9 weist einen Füllstandsensor 11 auf, der mit der Steuereinrichtung 10 ebenfalls verbunden ist. Die Steuereinrichtung 10 steuert auch die Bewegung der Ablegeeinrichtung 7 und gegebenenfalls der Wickeleinrichtung 3 über die Arbeitsfläche 2. Ein Beispiel für den Füllstandssensor wird unten erläutert. Die mechanische Spannung, mit der die Speichereinrichtung 9 auf die Wendel 6 wirkt, ist im Wesentlichen konstant. Sie verändert sich über den Befüllungsgrad der Speichereinrichtung 9 um weniger als 20 %.

Fig. 2 zeigt in stark schematisierter Form den Aufbau der Speichereinrichtung 9.

Die Wendel 6 ist hier lediglich durch eine durchgezogene Linie dargestellt. Die Speichereinrichtung 9 weist zwei Hebel 12, 13 auf, die um eine gemeinsame Schwenkachse 14 gegeneinander verschwenkbar sind. Am Hebel 12 sind zwei Umlenkrollen 15, 16 drehbar gelagert. Am Hebel 13 sind zwei Umlenkrollen 17, 18 drehbar gelagert. Die Wendel 6, die von der Wickeleinrichtung 3 zuläuft, ist über die Umlenkrolle 15 am ersten Hebel 12, über die Umlenkrolle 17 am zweiten Hebel 13, über die Umlenkrolle 16 am ersten Hebel 12 und über die Umlenkrolle 18 am zweiten Hebel 13 geführt, bevor sie zur Ablegeeinrichtung 7 gelangt. Die Wendel 6 kann auch auf andere Weise geführt werden, beispielsweise über die Umlenkrollen 18, 16, 17, 15, solange gewährleistet ist, dass sie mindestens einen Abschnitt aufweist, der zwischen Umlenkrollen auf verschiedenen Hebeln 12, 13 angeordnet ist.

Die Hebel 12, 13 sind mit einer Vorspanneinrichtung 19 verbunden. Die Vorspanneinrichtung 19 spannt die Hebel 12, 13 in eine Öffnungsrichtung vor, also in eine Richtung, in der ein Winkel α zwischen den beiden Hebeln 12, 13 vergrößert wird.

Dies kann beispielsweise dadurch realisiert werden, dass die Vorspanneinrichtung 19 mit dem einen Hebel 12 drehfest verbunden ist und über eine Welle 20 auf den zweiten Hebel 13 wirkt, wobei die Welle 20 mit einem vorbestimmten Drehmoment belastet ist.

Die Vorspanneinrichtung 19 ist als Drehmagnet ausgebildet, vorzugsweise als Elektromagnet, der über die Steuereinrichtung 10, die hier auch als Stromsteuereinrichtung fungiert, mit einem vorwählbaren Strom versorgt werden kann. Über die Größe des Stroms lässt sich auch die Größe des vom Elektromagneten erzeugten Drehmoments auf die Welle 20 einstellen und damit die mechanische Spannung, mit der die Speichereinrichtung 9 auf die Wendel 6 wirkt. Ein Elektromagnet ist in besonderer Weise in der Lage, das Drehmoment im Rahmen der oben angegebenen Grenze konstant zu halten.

Der Füllstandssensor ist hier als Winkelsensor 11 ausgebildet, der die Winkelstellung, also den Winkel α, der beiden Hebel 12, 13 relativ zueinander erfasst. Der Winkelsensor 11 kann in die Vorspanneinrichtung 19 integriert oder mit der Vorspanneinrichtung 19 verbunden sein.

Der Winkelsensor 11 ist ebenfalls mit der Steuereinrichtung 10 verbunden. Wenn die Veränderung des von der Vorspanneinrichtung 19 erzeugten Drehmoments noch kleiner gehalten werden soll, kann man auch so vorgehen, dass man eine Kennlinie des Drehmagneten in der Steuereinrichtung 10 ablegt und die Steuereinrichtung 10 dem Elektromagneten, der die Vorspanneinrichtung 19 bildet, einen Strom zuführt, der bei dem aktuell vorliegenden und durch den Winkelsensor 11 ermittelten Winkel genau das gewünschte Drehmoment erzeugt.

Mit der dargestellten Vorrichtung können drei Teilfunktionen gleichzeitig realisiert werden. Die kontinuierlich erzeugten Wendeln 6 werden während des Zeitintervalls für das Umsetzen der Ablegeeinrichtung 7, gegebenenfalls mit der Wickeleinrichtung 3, vom Ende der abgelegten Arbeitsbreite zurück an den Anfang der nachfolgenden Wendellegung gespeichert. Dabei wird zum Zweiten eine definierte und konstant gehaltene Wendelspannung unabhängig vom Füllzustand der Speichereinrichtung 9 aufrecht gehalten. Zum Dritten wird der Füllstand der Speichereinrichtung 9 kontinuierlich durch den Winkelsensor 11 gemessen, um Daten für die Synchronisation der Wendelerzeugungs-Geschwindigkeit und der Wendelablege-Geschwindigkeit zur Verfügung zu haben.

Durch das Aufbringen eines wählbaren und in gewissen Grenzen konstanten Drehmoments an der Welle 20 der Vorspanneinrichtung 19 wird eine definierte mechanische Längsspannung der Wendel 6 und der Speichereinrichtung 9 erzeugt und eine unkontrollierte Bewegung der Wendel 6 ist somit ausgeschlossen. Ein Verknoten kann also praktisch nicht vorkommen.

Wenn nun unter konstant gehaltene Spannung der Wendel 6 der Speichereinrichtung 9 mehr Wendel 6 zufließt, als aus ihr abgezogen wird, so vergrößert sich der Winkel α zwischen den Hebeln 12, 13 und der Abstand der sich gegenüber liegenden Umlenkrollen 15, 17; 16, 18 vergrößert sich, so dass die in der Speichereinrichtung 9 vorhandene Länge der Wendel 6 zunimmt. Im Falle einer höheren Abzugsgeschwindigkeit gegenüber der Zuführgeschwindigkeit hingegen werden die Hebel 12, 13 wieder aufeinander zu geschwenkt.

Durch Messen der schwenkenden Winkelbewegung der unter konstantem Drehmoment gehaltenen Welle 20 lässt sich also eine Zunahme und eine Abnahme der in der Speichereinrichtung 9 befindlichen Länge der Wendel 6 ermitteln, was wiederum als Reglersignal für die Synchronisation der Ablegegeschwindigkeit genutzt werden kann.

Durch Einprägen einer vorwählbaren Stromstärke in den als Vorspanneinrichtung 19 verwendeten Elektromagneten wird ein dem Strom proportionales Drehmoment erzeugt, das unabhängig vom Winkel α über den gesamten Winkelbewegungsbereich annähernd konstant bleibt.

## Patentansprüche

1. Vorrichtung (1) zum Herstellen von Wendelsieben mit mindestens einer oberhalb einer Arbeitsfläche (2) angeordneten Wickeleinrichtung (3) zum Erzeugen von Wendeln (6) und einer Ablegeeinrichtung (7), mit der die Wendel (6) auf der Arbeitsfläche (2) ablegbar sind, **dadurch gekennzeichnet, dass** der Wickeleinrichtung (3) eine Speichereinrichtung (9) nachgeschaltet ist, die während einer Rückfahrbewegung der Ablegeeinrichtung (7) die Lange der Wendel (6) aufnimmt, die in der Zeit der Rückfahrbewegung durch die Wickeleinrichtung (3) erzeugt wird.

2. Vorrichtung nach Anspruch 1, **dadurch gekennzeichnet, dass** die Speichereinrichtung (9) zwischen der Wickeleinrichtung (3) und der Ablegeeinrichtung (7) angeordnet ist.

3. Vorrichtung nach Anspruch 1 oder 2, **dadurch gekennzeichnet, dass** die Speichereinrichtung (9) einen Füllstandsensor (11) aufweist,

4. Vorrichtung nach einem der Ansprüche 1 bis 3, **dadurch gekennzeichnet, dass** die Speichereinrichtung (9) mit einer vorwählbaren Spannung betreibbar ist.

5. Vorrichtung nach Anspruch 4, **dadurch gekennzeichnet, dass** die Spannung über den Befüllungsgrad der Speichereinrichtung (9) nahezu konstant ist.

6. Vorrichtung nach einem der Ansprüche 1 bis 5, **dadurch gekennzeichnet, dass** die Speichereinrichtung (9) zwei Hebel (12, 13) aufweist, die um eine gemeinsame Schwenkachse (14) gegeneinander verschwenkbar sind, wobei an jedem Hebel (12, 13) mindestens eine Umlenkeinrichtung (15, 16; 17, 18) angeordnet ist, über die die Wendel (6) führbar ist.

7. Vorrichtung nach Anspruch 6, **dadurch gekennzeichnet, dass** die Hebel mit einer Vorspanneinrichtung (19) verbunden sind, die die Hebel (12, 13) in eine Öffnungsrichtung vorspannt.

8. Vorrichtung nach Anspruch 7, **dadurch gekennzeichnet, dass** die Vorspanneinrichtung (19) als Drehmagnet ausgebildet ist.

9. Vorrichtung nach Anspruch 8, **dadurch gekennzeichnet, dass** der Drehmagnet als Elektromagnet ausgebildet ist, der mit einer Stromsteuereinrichtung (10) verbunden ist.

10. Vorrichtung nach einem der Ansprüche 6 bis 9, **dadurch gekennzeichnet, dass** ein Winkelsensor (21)vorgesehen ist, der eine Winkelstellung der Hebel (12, 13) zueinander erfasst.

11. Vorrichtung nach Anspruch 10, **dadurch gekennzeichnet, dass** der Winkelsensor (21) in die Vorspanneinrichtung (19) integriert oder mit der Vorspanneinrichtung (19) verbunden ist.

## Claims

1. Apparatus (1) for manufacturing coil screens with at least one winding device (3), arranged above a working surface (2), for the production of coils (6) and a depositing device (7) with which the coils (6) can be deposited on the working surface (2), **characterized in that** a storage device (9) is arranged downstream from the winding device (3), said storage device receiving during the return travel movement of the depositing device (7) the length of the coil (6) that is produced by the winding device (3) during the interval of the return travel movement.

2. Apparatus according to claim 1, **characterized in that** the storage device (9) is arranged between the winding device (3) and the depositing device (7).

3. Apparatus according to claim 1 or 2, **characterized in that** the storage device (9) comprises a fill-level sensor (11).

4. Apparatus according to one of claims 1 through 3, **characterized in that** the storage device (9) can be operated with a preselectable tension.

5. Apparatus according to claim 4, **characterized in that** the tension is nearly constant across the degree of filling of the storage device (9).

6. Apparatus according to one of claims 1 through 5, **characterized in that** the storage device (9) comprises two levers (12, 13) which can be pivoted relative to one another about a common pivot axis (14), wherein at least one diversion device (15, 16; 17, 18) is arranged on each lever (12, 13), via which device the coil (6) can be guided.

7. Apparatus according to claim 6, **characterized in that** the levers are connected to a pretensioning device (19) which pretensions the levers (12, 13) in an opening direction.

8. Apparatus according to claim 7, **characterized in that** the pretensioning device (19) is embodied as a rotating magnet.

9. Apparatus according to claim 8, **characterized in that** the rotating magnet is embodied as an electromagnet that is connected to a current control device (10).

10. Apparatus according to one of claims 6 through 9, **characterized in that** an angle sensor (21) is provided which detects an angular position of the levers (12, 13) relative to one another.

11. Apparatus according to claim 10, **characterized in that** the angle sensor (21) is integrated in the pretensioning device (19) or connected to the pretensioning device (19).

## Revendications

1. Dispositif (1) pour la fabrication de tamis à spirales avec au moins un dispositif de bobinage (3) aménagé au-dessus d'une surface de travail (2) pour produire des spirales (6) et un dispositif de dépôt (7), avec lequel les spirales (6) peuvent être déposées sur la surface de travail (2), **caractérisé en ce qu'**est aménagé en aval du dispositif de bobinage (3) un dispositif accumulateur (9) qui capte, au cours d'un déplacement de retour du dispositif de dépôt (7) la longueur des spirales (6), qui est produite par le dispositif de bobinage (3) dans l'intervalle du déplacement de retour.

2. Dispositif selon la revendication 1, **caractérisé en ce que** le dispositif accumulateur (9) est aménagé entre le dispositif de bobinage (3) et le dispositif de dépôt (7).

3. Dispositif selon la revendication 1 ou 2, **caractérisé en ce que** le dispositif accumulateur (9) présente un capteur de niveau (11).

4. Dispositif selon l'une quelconque des revendications 1 à 3, **caractérisé en ce que** le dispositif accumulateur (9) peut être exploité avec une tension pré-sélectionnable.

5. Dispositif selon la revendication 4, **caractérisé en ce que** la tension est presque constante au-dessus du degré de remplissage du dispositif accumulateur (9).

6. Dispositif selon l'une quelconque des revendications 1 à 5, **caractérisé en ce que** le dispositif accumulateur (9) présente deux leviers (12,13) qui peuvent pivoter l'un vis-à-vis de l'autre autour d'un axe pivot commun (14), dans lequel est agencé sur chaque levier (12, 13) au moins un dispositif de renvoi (15, 16 ; 17, 18) sur lequel la spirale (6) peut être guidée.

7. Dispositif selon la revendication 6, **caractérisé en ce que** les leviers sont reliés à un dispositif de précontrainte (19) qui place les leviers (12, 13) sous précontrainte dans une direction d'ouverture.

8. Dispositif selon la revendication 7, **caractérisé en ce que** le dispositif de précontrainte (19) se présente sous la forme d'un aimant rotatif.

9. Dispositif selon la revendication 8, **caractérisé en ce que** l'aimant rotatif se présente sous la forme d'un électroaimant qui est connecté à un dispositif d'excitation par courant (10).

10. Dispositif selon l'une quelconque des revendications 6 à 9, **caractérisé en ce qu'**il est prévu un capteur d'angle (21) qui détecte une position angulaire mutuelle des leviers (12, 13).

11. Dispositif selon la revendication 10, **caractérisé en ce que** le capteur d'angle (21) est intégré au dispositif de précontrainte (19) ou est raccordé au dispositif de précontrainte (19).
